(19) Europäisches Patentamt
European Patent Office
Office européen des brevets

(11) **EP 3 483 617 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(51) Int Cl.:
*G01R 31/30* (2006.01)     *H04N 17/00* (2006.01)
*H04N 17/04* (2006.01)

(21) Anmeldenummer: **18205156.5**

(22) Anmeldetag: **08.11.2018**

(54) **VERFAHREN ZUR LATENZMESSUNG**

LATENCY MEASUREMENT METHOD

PROCÉDÉ DE MESURE DE LA LATENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2017 AT 509372017**
**24.11.2017 DE 102017010887**

(43) Veröffentlichungstag der Anmeldung:
**15.05.2019 Patentblatt 2019/20**

(73) Patentinhaber: **EYYES GmbH**
**3494 Gedersdorf (AT)**

(72) Erfinder: **TRAXLER, Johannes**
**3500 Imbach (AT)**

(74) Vertreter: **Burgstaller, Peter et al**
**Rechtsanwalt**
**Landstrasse 12**
**Arkade**
**4020 Linz (AT)**

(56) Entgegenhaltungen:
**US-A1- 2012 287 289     US-B1- 6 625 558**

- **BACHHUBER CHRISTOPH ET AL: "A system for high precision glass-to-glass delay measurements in video communication", 2016 IEEE INTERNATIONAL CONFERENCE ON IMAGE PROCESSING (ICIP), IEEE, 25. September 2016 (2016-09-25), Seiten 2132-2136, XP033016893, DOI: 10.1109/ICIP.2016.7532735 [gefunden am 2016-08-03]**
- **JUAN ANTONIO LENERO-BARDALLO ET AL: "A 3.6 µs Latency Asynchronous Frame-Free Event-Driven Dynamic-Vision-Sensor", IEEE JOURNAL OF SOLID-STATE CIRCUITS., Bd. 46, Nr. 6, 1. Juni 2011 (2011-06-01), Seiten 1443-1455, XP055556546, PISCATAWAY, NJ, USA ISSN: 0018-9200, DOI: 10.1109/JSSC.2011.2118490**

**EP 3 483 617 B1**

**Beschreibung**

Diese Erfindung betrifft ein Verfahren zum Messen einer Übertragungszeit zwischen dem Erzeugen eines Bildsignals vor einem Kamerasensor einer Kamera und dem Anzeigen des Bildsignals auf einem Bildschirm, welches Bildsignal zwischen dem Kamerasensor und dem Bildschirm übertragen wird.

Bei Verfahren nach dem Stand der Technik wurde eine vor der Kamera angeordnete Uhr anzeigend eine erste Uhrzeit und eine am Bildschirm angezeigte zweite Uhrzeit gleichzeitig fotografiert und die Übertragungszeit aus der Differenz zwischen den angezeigten Uhrzeiten errechnet. Selbst ein Laie erkennt, dass ein solches Verfahren keinesfalls als hinreichend genau angesehen werden kann. DE102013215756 beschreibt eine Vorrichtung zum Überwachen der Funktionsfähigkeit einer Kamera. Die in diesem Dokument offenbarte Vorrichtung umfasst keine Mittel, die ein korrektes Ergebnis des mit dieser Vorrichtung durchführbaren Verfahrens gewährleisten. Der Benutzer kann beispielsweise das Lichtsignal nur für eine so geringe Einschaltdauer einschalten, sodass dieses aufgrund der technischen Eigenschaften des Lichtsensors nicht erfasst werden kann.

US20140347499 offenbart ebenso nicht das Erfordernis einer minimalen Lichteinschaltdauer, sodass ein korrektes Ergebnis erzielt werden kann.

DE102013215756 und US20140347499 sind auf die Aufnahme und Ausgabe von Lichtsignalen beschränkt. Diese Dokumente erwähnen nicht, dass die Latenz mittels eines Objektes gemessen werden kann.

Die Dokumente Bachhuber Christoph et al: "A system for high precision glass-to-glass delay measurement in video communication", 2016 IEEE International Conference On Image Processing (ICIP), 25. 09.2016 (2016-09-25), Seiten 2132-2136 und Juan Antonio Lenero-Bardallo et al: "A 3.6 $\mu$s Latency Asynchronous Frame-Free Event-Driven Dynamic-Vision-Sensor", IEEE Journal of Solid- State Circuits., Bd. 46, Nr. 6, 1. Juni 2011 (2011-06-01), Seiten 1443-1455, beschäftigen sich nicht mit der Latenz des Kamerasensors und dessen Einfluss auf die Latenzmessung. Die Erfindung stellt sich der Aufgabe, die Übertragungszeit zwischen der Kamera und dem Bildschirm genauer und insbesondere verlässlicher als bei einer Anwendung von Messmethoden nach dem Stand der Technik zu messen.

Erfindungsgemäß wird dies durch den Anspruch 1 gelöst.

Der Lichtsensor kann ein Phototransistor sein.

Die Lichtquelle kann eine Lampe oder dergleichen sein. Die Lichtquelle kann auch ein nach Verfahren nach dem Stand der Technik detektierbares Objekt mit charakteristischen Eigenschaften wie beispielsweise eine Farbe sein, welche Farbe sich von der Umgebung eindeutig abgrenzt.

Vorzugsweise kann eine LED als Lichtquelle oder eine sonstige Lichtquelle unmittelbar vor dem Kamerasensor zur Erzeugung eines Bildsignals angeordnet werden und das LED als Lichtquelle zu einem Einschaltzeitpunkt für eine Einschaltdauer eingeschaltet werden. Die Verwendung einer LED als Lichtquelle zur Erzeugung des Lichtsignals kann sich dadurch auszeichnen, dass andere Einflüsse als die reine Übertragungszeit auf das Messergebnis zurückgedrängt werden.

LED ist das allgemein gebräuchliche Kurzwort für Licht emittierende Diode. Eine LED zeichnet sich dadurch aus, dass über die Einschaltdauer eine konstante Lichtstärke emittiert wird. Beim Einschalten der LED steigt die Lichtstärke des emittierten Lichts derart schnell an, dass die ansteigende Leuchtstärke vernachlässigbar ist und keinen Einfluss auf das erfindungsgemäße Verfahren hat.

Andere Leuchtmittel als LED weisen zumeist eine beim Einschalten des Leuchtmittels ansteigende Lichtstärke auf.

Aufgrund der oben angeführten Eigenschaften einer LED ist es möglich, in einer für das erfindungsgemäße Verfahren vorteilhaften Weise den Zeitpunkt des Emittierens von Licht durch eine LED genau zu bestimmen. Es muss im Unterschied zu anderen Leuchtmitteln kein Schwellenwert oder dergleichen definiert werden, bei welchem Schwellenwert eine ausreichende Lichtstärke emittiert wird. Ein Einfluss einer steigenden Lichtstärke vor und nach dem Erreichen eines gegebenenfalls definierten Grenzwertes auf das Messverfahren kann sohin ausgeschlossen werden.

Das von der Lichtquelle emittierte Lichtsignal kann ein durch die Form der LED vorgegebenes Muster aufweisen. Es wird weiters kein bestimmtes Muster des Lichtsignals durch das teilweise Abdecken der LED oder durch eine spezielle Anordnung von mehreren LED geschaffen. Bei einem Vorsehen von mehreren LED werden diese LED nebeneinander angeordnet.

Die Lichtquelle kann dem Umfang des Kamerasensors oder dem Umfang eines Kameraobjektives folgend angeordnet sein. Es können beispielsweise mehrere LED kreisförmig um das kreisförmige Kameraobjektiv angeordnet sein. Das von der Lichtquelle emittierte Licht hat einen Einfluss auf den Beleuchtungszustand des Kamerasensors und ist sohin am Bildschirm feststellbar und messbar.

Erfindungsgemäß kann in Ergänzung oder alternativ zu der Erzeugung des Bildsignals mittels einer Lichtquelle das Bildsignal auch mittels eines Objektes erzeugt werden, welches Objekt zu einem Anordnungszeitpunkt für eine Anordnungsdauer vor dem Kamerasensor angeordnet wird. Die hier offenbarte Erfindung kann sich dadurch auszeichnen, dass Objekte mit einer üblichen Weise anderen Verwendung zur Latenzmessung herangezogen werden. Dies schließt ein, dass das am Bildschirm angezeigte Objekt mittels Verfahren nach dem Stand der Technik als solches erkannt wird.

Ein vor dem Kamerasensor angeordnetes Objekt zeichnet sich dadurch aus, dass dieses vorhanden oder nicht vorhanden ist. Eine allmähliche oder eine in ihrer Intensität veränderliche Präsenz ähnlich zu den Lichtquellen nach dem Stand der Technik mit einer ansteigenden Lichtstärke liegt bei der Anordnung eines Objektes nicht vor. Der Fachmann wählt die Größe des Objektes einerseits ausreichend groß, sodass dieses eindeutig detektierbar ist, und andererseits möglichst klein, sodass dieses bei einer Bewegung in den Aufnahmebereich nur für eine möglichst kurze Zeitspanne nur teilweise im Aufnahmebereich vorhanden ist.

Die Anordnung des Objektes im Aufnahmebereich kann durch eine Bewegung des Objektes in den Aufnahmebereich erfolgen. Das Objekt kann hierbei tangential oder rechtwinkelig oder in einem beliebigen Winkel zu dem Aufnahmebereich bewegt werden.

Das Objekt weist vorzugsweise Objekteigenschaften wie geometrische, farbliche Objekteigenschaften auf, mit Hilfe der Objekteigenschaften das Objekt mittels Verfahren und Methoden nach dem Stand der Technik von weiteren Objekten unterschieden werden kann. Der Fachmann kann hierbei Verfahren nach dem Stand der Technik zur Objekterkennung einsetzen.

Das Objekt kann mittels einer Führungseinheit geführt und durch einen Antrieb angetrieben von einem Bereich außerhalb des Aufnahmebereiches in den Aufnahmebereich bewegt werden.

Das Objekt kann auch ein Spiegel sein, über welchen Spiegel die von einer Lichtquelle emittierten Lichtstrahlen auf den Kamerasensor projiziert werden. Durch die Bewegung des Objektes kann die Projizierung der Lichtstrahlen aktiviert oder deaktiviert werden. Unter Verweis auf die obige Beschreibung kann diese Lichtquelle eine LED sein.

Der Aufnahmebereich ist ein räumlicher Bereich, welcher durch die Aufnahmebereichsgrenzen definiert sind. Die Aufnahmebereichsgrenzen können diese Definition über die Begrenzung der Ausdehnung des Aufnahmebereiches und/oder durch eine Beabstandung des Aufnahmebereiches zu einer Ebene wie beispielsweise der Ebene des Kamerasensors liefern.

Die Aufnahmegrenzen werden durch die technischen Eigenschaften der Kamera bestimmt.

Es liegt nahe, das erfindungsgemäße Verfahren mittels eines computerimplementierten Steuerungsverfahrens zu steuern. Der Fachmann erhält unter der Annahme, dass der Einschaltzeitpunkt der LED dem Zeitpunkt des Emittierens von Licht entspricht, den Einschaltzeitpunkt des Lichtes. Der Fachmann erhält den Anordnungszeitpunkt des Objektes durch einen Vergleich der Position des Objektes und des Aufnahmebereiches des Kamerasensors.

Die Messung des Zeitpunktes, zu welchem das Bildsignal am Bildschirm angezeigt wird, erfolgt mittels Phototransistoren.

Der Einschaltzeitpunkt der LED als Lichtquelle beziehungsweise der Anordnungszeitpunkt des Objektes und die Abtastposition der Kamera sind als stets voneinander unabhängige Größen zu betrachten. Es ist keinesfalls möglich, den Einschaltzeitpunkt der LED beziehungsweise den Anordnungszeitpunkt des Objektes und die Abtastposition des Kamerasensors in nur irgendeiner Form zu synchronisieren.

Das durch eine vor dem Lichtsensor angeordnete Lichtquelle und/oder durch ein vor dem Lichtsensor angeordnetes Objekt erzeugte Bildsignal weist erfindungsgemäß eine Lichtsignaldauer größer als die inverse Bildfrequenz der Kamera auf. Dies wird dadurch erreicht, dass die Lichtquelle über eine Einschaltdauer größer als die inverse Bildfrequenz der Kamera bei Anordnung vor dem Lichtsensor eingeschaltet ist beziehungsweise das Objekt über eine Anordnungsdauer größer als die inverse Bildfrequenz der Kamera vor dem Lichtsensor angeordnet ist.

Damit ein Bildsignal detektiert wird, muss die LED- bevor ein Vollbild der Kamera zur Gänze abgetastet wurde - mindestens für eine Dauer $t_{min}$ eingeschaltet beziehungsweise das Objekt mindestens für eine Dauer $t_{min}$ im Aufnahmebereich des Kamerasensors angeordnet sein, wobei die zu wählende Dauer $t_{min}$ von der Bildfrequenz der Kamera abhängt.

Bei Verwendung einer PAL-Kamera (PAL steht hierbei für Phase Alternating Line) kann beispielhaft $t_{min}$ bei einem Halbbild mit 20 Millisekunden gewählt werden. Bei Verwendung einer HD-Kamera kann beispielhaft t bei einem Vollbild mit 17,0 Millisekunden bis 40,0 Millisekunden angegeben werden. Diese angegebenen Werte stellen lediglich Richtwerte dar.

Die obigen Angaben über die Einschaltdauer und die Anordnungsdauer beziehen sich auf die Annahme, dass der gesamte Aufnahmebereich am Bildschirm dargestellt wird. Soll nur ein Teil des Aufnahmebereiches am Bildschirm dargestellt werden, so verringert sich die Einschaltdauer beziehungswiese die Anordnungsdauer in diesem Verhältnis.

Der Kamerasensor kann auf einer zeilenweisen Abtastung basieren. Die erforderliche Einschaltdauer und die erforderliche Anordnungsdauer können reduziert werden, wenn sich die Lichtquelle oder das Objekt über mehrere Zeilen erstreckt und nur ein Teil des Objektes dargestellt werden soll.

$$p_{cam}(t) \sim U(0, f_{cam}^{-1}) + t_{min,cam}$$

Findet das Einschalten der LED und die Übertragung der Information innerhalb einer Vollbildabtastperiode statt, ergibt sich eine Verzögerung von mindestens $t_{min}$ maximal $f_{cam}^{-1}$, wobei $f_{cam}$ die inverse Bildrate der Kamera in Millisekunden [ms] ist.

Liegt der Einschaltzeitpunkt der LED so, dass diese Information erst bei Abtastung des nächsten Bildes übertragen wird, ergibt sich ein notwendiges Intervall von mindestens $f_{cam}^{-1}$ [ms] und maximal $f_{cam}^{-1}+t_{min}$ [ms]. Dieser Fall kann auch eintreten, wenn die LED so spät eingeschaltet wird, dass die Beleuchtung nicht ausreicht, einen vom Kamerasensor erfassbaren Schwellwert zu erreichen oder wenn die LED erst nach Ende der Belichtungszeit eingeschaltet wird. Die minimale Zeit zur Aufnahme eines Bildes und die Latenz der Elektronik erhöht sich sohin um $t_{min,cam}$.

Das erfindungsgemäße Verfahren kann sich dadurch auszeichnen, dass durch eine sich über die Kamerasensorfläche des Kamerasensors erstreckende LED die gesamte Kamerasensorfläche belichtet wird. Vorzugsweise erfolgt die Belichtung der gesamten Kamerasensoroberfläche direkt.

Durch diesen Schritt wird ein Einfluss einer Latenz des Kamerasensors, welche das Messergebnis des erfindungsgemäßen Verfahrens negativ beeinflussen würde, unterbunden. Der Zeitpunkt des Einschaltens der LED ist unabhängig von der durch den Kamerasensor durchgeführten Abtastung erfassbar.

Es folgt hieraus die für das erfindungsgemäße Verfahren relevante Latenz beziehungsweise Übertragungszeit:

$$p_{cam}(t) \sim 0 + t_{min,cam}$$

Die Lichtquelle kann hierzu in etwa in der Bildmitte des korrespondierenden Kamerabildes angeordnet werden.

Die Lichtquelle kann auf der Kamerasensorfläche angeordnet sein.

Die Lichtquelle kann auf einer Kameralinse der Kamera angeordnet werden.

Vorteilhaft kann eine Abdeckung vor der Kameralinse zur Abdunkelung des Kamerasensors vom Umgebungslicht angeordnet werden. Ein Abschirmen des Kamerasensors vom Umgebungslicht hat den Effekt, dass nur das von der Lichtquelle emittierte Licht in das erfindungsgemäße Messverfahren einfließt.

Die Lichtquelle kann auf der dem Kamerasensor zugewandten Seite der Abdeckung angeordnet sein, sodass das durch die Lichtquelle emittierte Licht direkt auf den Kamerasensor abgegeben wird. Die Lichtquelle ist in räumlicher Hinsicht zwischen der Abdeckung und dem Kamerasensor angeordnet.

Der Lichtsensor kann in der Bildmitte des Bildschirmes angeordnet werden.

Die Lichtquelle überstrahlt zufolge der Anordnung unmittelbar vor dem Lichtsensor den gesamten lichtempfindlichen Messbereich des Lichtsensors. Der Lichtsensor erreicht sohin den produktspezifischen Sättigungswert.

Ein Anordnen des Lichtsensors in der Bildmitte des Bildschirmes schafft die besten Messergebnisse.

Es kann auch alternativ oder ergänzend hierzu ein sich über eine Bildschirmfläche des Bildschirmes erstreckender Lichtsensor auf dem Bildschirm angeordnet werden. Hierdurch kann der Einfluss eines teilbereichsweisen Aufbaus der Anzeige auf dem Bildschirm zurückgedrängt werden.

Das erfindungsgemäße Verfahren kann zur Bestimmung eines Einflusses eines zwischen der Kamera und dem Bildschirm geschalteten Gerätes durchgeführt werden, wobei zumindest ein Messverfahren gemäß der obigen Beschreibung ohne das Gerät und zumindest ein Messverfahren gemäß der obigen Beschreibung mit dem zwischen der Kamera und dem Bildschirm geschalteten Gerät durchgeführt wird, sodass die durch das Gerät verursachte Latenz gemessen wird.

Unter einer durch das Gerät verursachten Latenz wird im Allgemeinen die Veränderung der Übertragungszeit bei Schaltung eines Gerätes zwischen der Kamera und dem Bildschirm verstanden.

Zum besseren Verständnis der Erfindung wird diese anhand der nachfolgenden Figuren näher erläutert.

Fig. 1      zeigt eine mögliche Anwendung des erfindungsgemäßen Verfahrens zur Bestimmung einer durch die Kamera und den Bildschirm hervorgerufene Latenz;

Fig. 2      zeigt eine mögliche Anwendung des erfindungsgemäßen Verfahrens zur Bestimmung einer durch die Kamera, den Bildschirm und eines zwischen Kamera und Bildschirm geschalteten Gerätes hervorgerufenen Latenz;

Fig. 3      zeigt eine mögliche Anwendung des erfindungsgemäßen Verfahrens zur Bestimmung einer durch die Kamera und den Bildschirm hervorgerufenen Latenz;

Fig. 4 bis Fig. 6      zeigen Messergebnisse, welche Messergebnisse durch Anwendung des erfindungsgemäßen Verfahrens ermittelt wurden;

Fig. 7      umfasst eine Tabelle mit Angaben über das Kameramodul und den Monitor, welches Kameramodul und welcher Monitor bei den in Figur 4 bis Figur 6 dargestellten Messungen verwendet wurden.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen beziehungsweise gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und es sind diese Lageangaben bei einer Lageänderung sinngemäß auf die neue Lage zu übertragen.

Es wird mittels einer Lichtquelle 1 ein erstes Licht 3 auf die Kamera 2 emittiert.

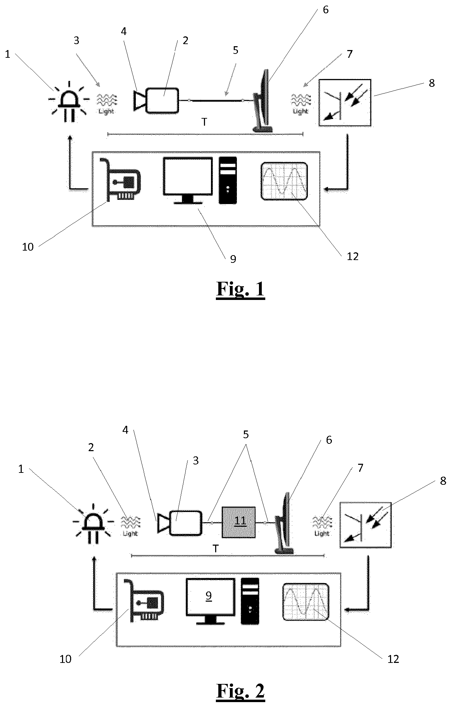

Das emittierte erste Licht 3 beziehungsweise die Lichtwellen treffen hierbei direkt auf die Kameralinse 4 auf. Durch die in Figur 1 nicht dargestellte Abdeckung wird sichergestellt, dass im Wesentlichen ausschließlich das emittierte erste Licht 3 auf der Kameralinse 4 auftrifft.

Die Kamera 2 ist über Verbindungmittel 5 nach dem Stand der Technik mit dem Bildschirm 6 verbunden, sodass ein durch die Kamera 2 aufgenommenes Bildsignal, welches Bildsignal im Wesentlichen das emittierte erste Licht 3 umfasst, an dem eine Grafikkarte umfassenden Bildschirm 6 angezeigt wird.

Der Bildschirm 6 emittiert wiederum ein zweites Licht 7, welches zweites Licht 7 direkt auf einen Phototransistor 8 auftrifft.

Das anhand von Figur 1 veranschaulichte Verfahren wird mittels eines Computers 9 gesteuert. Durch den Computer wird die Lichtquelle 1 ein- und ausgeschaltet und sohin der Einschaltzeitpunkt der Lichtquelle 1 und weiters der Zeitpunkt des Emittierens des ersten Lichtes 3 definiert. Der Computer 9 ist - wie in Figur 1 dargestellt - über eine I/O Karte 10 mit der LED gekoppelt.

Der Zeitpunkt wird weiters durch den Phototransistor 8 gemessen und an den Computer 9 weitergegeben. Die durch die Latenz von Kamera 2 und Bildschirm 6 hervorgerufene erste Übertragungszeit T1 ergibt sich aus dem Einschaltzeitpunkt t_Licht_ein und dem Zeitpunkt t dis, zu welchem Zeitpunkt t dis das Bildsignal am Bildschirm detektierbar ist:

$$T1 = t_{Licht,ein} - t, dis$$

Die ermittelte erste Übertragungszeit T1 setzt sich bei dem in Figur 1 dargestellten Ausführungsbeispiel zusammen aus der Videoaufnahme, Videoübertragung und Videowiedergabe. Letztere beinhalten insbesondere die Zeit für die Durchführung des Programmbefehls, für die Weitergabe des Befehls an die 110-Karte 10 und die Reaktionszeit der I/O-Karte 10, die Zeitspanne vom Beginn des Stromflusses bis zum Emittieren von Photonen in einer LED als Lichtquelle 1, die Zeit zur Vollbildabtastung der Kamera durch den Kamerasensor und die Signalverarbeitung der Kamera 2, die Zeit für die Übertragung des Bildsignals von der Kamera 2 zum Bildschirm 6 über die Verbindung 5, die erforderliche Zeit zur Bildsignalaufbereitung durch die Grafikkarte und den Aufbau des Bildschirmes 6, die Zeit für den Anstieg des Ausgangssignals des Phototransistors 8 bis zum Schwellenwert und die erforderliche Zeit zur Verarbeitung der Signale in der Digitaloszilloskop-Karte 12.

Figur 2 zeigt eine weitere Ausführungsform des erfindungsgemäßen Verfahrens. Der Aufbau der Elemente ist im Wesentlichen gleich zu dem in Figur 2 dargestellten Aufbau. Zusätzlich ist zwischen der Kamera 2 und dem Bildschirm 6 ein Gerät 11 geschaltet, über welches Gerät 11 das Bildsignal von der Kamera 2 zu dem Bildschirm 6 weitergegeben wird.

Die in Figur 2 gezeigte Anordnung der Elemente erlaubt wiederum die Bestimmung der zweiten Übertragungsdauer T2, wobei im Unterschied zu der in Figur 1 gezeigten Anordnung die durch das Gerät 11 hervorgerufene Signalverarbeitungsdauer miteinfließt.

Durch einen Vergleich der mittels der in Figur 1 dargestellten Anordnung gemessenen ersten Übertragungsdauer T1 und der mittels der in Figur 2 dargestellten Anordnung gemessenen zweite Übertragungsdauer T2 lässt sich der Einfluss des Gerätes 11 auf die zweite Übertragungsdauer T2 bestimmen.

Es wird mittels eines Objektes 13 ein Bildsignal 14 generiert, welches Bildsignal 14 von der Kamera 2 aufgenommen wird. Das Objekt 13 ist hierzu vor der Kameralinse 4 der Kamera 2 angeordnet. Die Kameralinse 4 ist Teil einer Scheibe 15. Das Objekt 13 ist ein Teil eines die Scheibe 15 reinigenden Scheibenwischers 18.

Es ist der Aufnahmebereich 16 der Kamera 2 als ein Teilbereich der Scheibe 15 bekannt. Der Aufnahmebereich 16 ist durch die Aufnahmebereichsgrenzen 17 eindeutig von dem übrigen Bereich der Scheibe 15 getrennt, wobei die relative Lage der Aufnahmebereichsgrenzen zu der Kamera 2, insbesondere zu der Kameralinse 4 durch die technischen Eigenschaften der Kamera 2 und der Kameralinse 4 vorgegeben sind. In Kenntnis der Aufnahmebereichsgrenzen 17 kann der Fachmann bestimmen, zu welchem Anordnungszeitpunkt und für welche Anordnungsdauer das Objekt 13 im Aufnahmebereich 16 angeordnet ist.

Die Kamera 2 ist über Verbindungmittel 5 nach dem Stand der Technik mit dem Bildschirm 6 verbunden, sodass ein durch die Kamera 2 aufgenommenes Bildsignal, welches Bildsignal im Wesentlichen das im Aufnahmebereich angeordnete Objekt 13 umfasst, an dem eine Grafikkarte umfassenden Bildschirm 6 angezeigt wird.

Der Bildschirm 6 emittiert wiederum ein zweites Licht 7, welches zweites Licht 7 direkt auf einen Phototransistor 8 auftrifft.

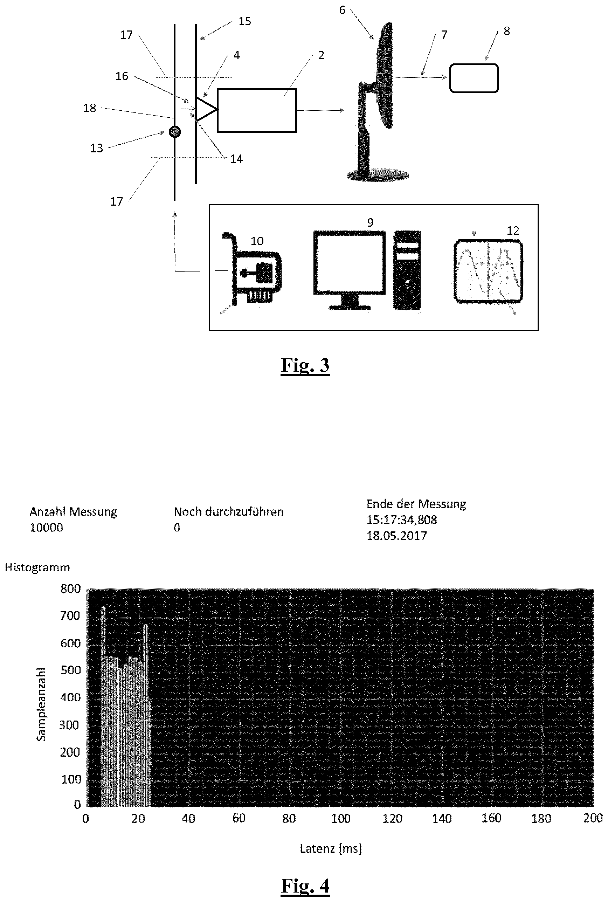

Das anhand von Figur 3 veranschaulichte Verfahren wird mittels eine Computers 9 gesteuert. Durch den Computer wird das Objekt 13 im Aufnahmebereich angeordnet und sohin der Anordnungszeitpunkt des Objektes 13 definiert. Der Computer 9 ist - wie in Figur 1 dargestellt - über eine I/O Karte 10 mit einem Mittel zum Anordnen des Objektes 13 wie beispielsweise einen Antrieb gekoppelt.

Der Zeitpunkt der Anzeige des Objektes 13 am Bildschirm 6 wird weiters durch den Phototransistor 8 gemessen und an den Computer 9 weitergegeben.

Die durch die Latenz von Kamera 2 und Bildschirm 6 hervorgerufene erste Übertragungszeit T1 ergibt sich aus dem Anordnungszeitpunkt und dem Zeitpunkt, zu welchem Zeitpunkt das Bildsignal am Bildschirm detektierbar ist.

Die ermittelte erste Übertragungszeit T1 setzt sich bei dem in Figur 1 dargestellten Ausführungsbeispiel zusammen aus der Videoaufnahme, Videoübertragung und Videowiedergabe. Letztere beinhalten insbesondere die Zeit für die Durchführung des Programmbefehls, für die Weitergabe des Befehls an die Karte 10 und die Reaktionszeit der I/O-Karte 10, die Zeitspanne vom Beginn des Stromflusses bis zum Emittieren von Photonen in einer LED als Lichtquelle 1, die Zeit zur Vollbildabtastung der Kamera durch den Kamerasensor und die Signalverarbeitung der Kamera 2, die Zeit für die Übertragung des Bildsignals von der Kamera 2 zum Bildschirm 6 über die Verbindung 5, die erforderliche Zeit zur Bildsignalaufbereitung durch die Grafikkarte und den Aufbau des Bildschirmes 6, die Zeit für den Anstieg des Ausgangssignals des Phototransistors 8 bis zum Schwellenwert und die erforderliche Zeit zur Verarbeitung der Signale in der Digitaloszilloskop-Karte 12.

Die in den Figuren 1 bis 3 dargestellten Ausführungsformen des erfindungsgemäßen Verfahrens zeigen lediglich mögliche Ausführungsvarianten des erfindungsgemäßen Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander sowie die Zusammenschau der in den Figuren dargestellten Ausführungsvarianten mit dem allgemeinen Teil der Beschreibung möglich sind und diese Variationsmöglichkeit aufgrund der Lehre zum technischen Handeln durch die gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

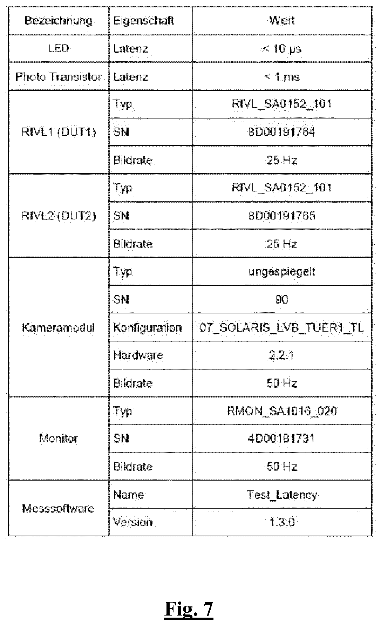

Der Ordnung halber sei abschließend darauf hingewiesen, dass zum besseren Verständnis des Aufbaus Elemente teilweise unmaßstäblich und/oder vergrößert und/oder verkleinert dargestellt wurden. Figur 4 zeigt ein Messergebnis einer unter Anwendung des erfindungsgemäßen Verfahrens durchgeführten Latenzmessung, wobei ein Aufbau ähnlich wie in Figur 1 dargestellt zur Anwendung kam. Es wurde hierbei ein Kameramodul und ein Bildschirm (Monitor) gemäß der in Figur 7 angeführten Tabelle verwendet.

Es wurden 10000 Messungen durchgeführt. Die Messung ergab eine minimale Latenz $T_{min,ref}$=8,5 +/-1 Millisekunden und eine maximale Latenz $T_{min,ref}$=28,5+/1 Millisekunden. Der Termin +1-1 Millisekunde berücksichtigt allfällige Messungenauigkeiten.

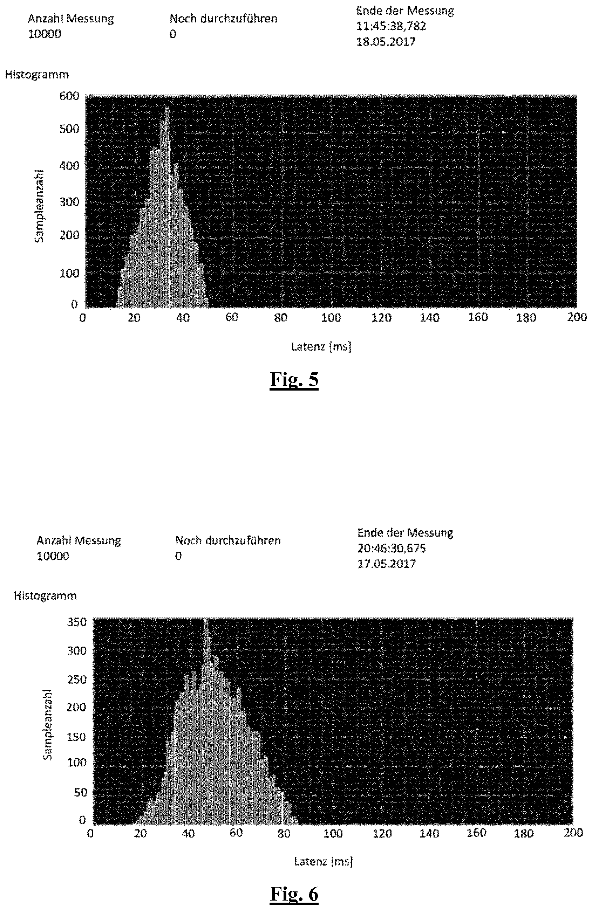

Figur 5 zeigt ein Messergebnis einer unter Anwendung des erfindungsgemäßen Verfahrens durchgeführten Latenzmessung, wobei ein zu dem in Figur 2 dargestellten ähnlicher Aufbau zur Anwendung kam. Es wurde ein Kameramodul, ein Bildschirm und ein RIVL1 als Gerät jeweils gemäß der in Figur 7 angeführten Tabelle in Serie geschaltet.

Insgesamt wurden wiederum 10000 Messungen durchgeführt und eine Latenz von $T_{min,sys1}$=13,5+/-1 Millisekunden und $T_{max,sys1}$=56,5+/- 1 Millisekunden ermittelt.

Figur 6 zeigt ein Messergebnis einer unter Anwendung des erfindungsgemäßen Verfahrens durchgeführten Latenzmessung. Es wurde eine Kamera, ein Bildschirm, ein RIVL1 und ein RIVL2 als Geräte 11 in Serie geschaltet. Insgesamt wurden wiederum 10000 Messungen durchgeführt, wobei eine Latenz $T_{min,sys1}$=19,5 +/- 1 Millisekunden und $T_{max,sys1}$ = 90,5 +/-1 Millisekunden ermittelt wurden.

Bei den in den Figuren 3 bis 5 dargestellten Ergebnissen der Messung wurden als Kameramodul und als Bildschirm dieselben Komponenten verwendet. Es kann sohin das in Figur 4 dargestellte Messergebnis als Referenzmessung zur Ermittlung der durch das Gerät 11 verursachten Latenz herangezogen werden. Die durch das Gerät 11 RIVL1 bedingte Latenz errechnet sich wie folgt, wobei sich ein etwaiger Messfehler aufsummiert:

$$T_{min,RIVL1}=T_{min,sys1} - T_{min,ref} = 5 \text{ +/- } 2 \text{ [ms]}$$

$$T_{max,RIVL1}=T_{max,sys1} - T_{max,ref} = 28 \text{ +/- } 2 \text{ [ms]}$$

In hierzu analoger Weise ist die durch zwei Geräte 11 RIVL1 und RIVL2 bedingte Latenz ermittelbar:

$$T_{min,RIVL1\ RIVL2}=T_{min,sys2} - T_{min,ref} = 11 +/- 2\ [ms]$$

$$T_{max,RIVL1\ RIVL2}=T_{max,sys2} - T_{min,ref} = 62 +/- 2\ [ms]$$

Kamera und Monitor haben sohin eine maximale Latenz T ≤ 29,5 Millisekunden.

Das Gerät RIVL1 hat eine maximale Latenz T ≤ 32,0 Millisekunden.

Die Geräte RIVL1, RIVL2 haben eine maximale Latenz von T ≤ 64,0 Millisekunden.

BEZUGSZEICHENLISTE

1   Lichtquelle (LED)
2   Kamera
3   erstes Licht (durch LED emittiert)
4   Kameralinse
5   Verbindungsmittel
6   Bildschirm
7   zweites Licht
8   Phototransistor
9   Computer
10  I/O-Karte
11  Gerät
12  Digitaloszilloskop-Karte
13  Objekt
14  Bildsignal
15  Scheibe
16  Aufnahmebereich
17  Aufnahmebereichsgrenze
T1  erste Übertragungsdauer [ms]
T2  zweite Übertragungsdauer [ms]

**Patentansprüche**

1.  Verfahren zum Messen einer Übertragungszeit

    zwischen dem Erzeugen eines Bildsignals vor einem Kamerasensor einer Kamera (2) und dem Anzeigen des Bildsignals auf einem Bildschirm (6),
    welches Bildsignal zwischen dem Kamerasensor und dem Bildschirm (6) übertragen wird, eine LED als eine Lichtquelle (1) vor dem Kamerasensor zur Erzeugung eines Bildsignals angeordnet wird und die Lichtquelle (1) zu einem Einschaltzeitpunkt für eine Einschaltdauer eingeschaltet wird,
    wobei die Einschaltdauer größer oder größergleich der inversen Bildfrequenz der Kamera ist.
    und ein Anzeigezeitpunkt, zu welchem Anzeigezeitpunkt das Bildsignal am Bildschirm (6) angezeigt wird, mittels eines Lichtsensors erfasst wird,

    **dadurch gekennzeichnet, dass**
    durch eine sich über die Kamerasensoroberflache des Kamerasensors erstreckende LED als Lichtquelle (1) die gesamte Kamerasensorflache belichtet wird.

2.  Verfahren nach Anspruch 1, **dadurch gekennzeichnet, dass**

    eine LED als Lichtquelle (1) unmittelbar vor dem Kamerasensor zur Erzeugung eines Bildsignals angeordnet wird,
    die LED als Lichtquelle (1) zu einem Einschaltzeitpunkt für eine Einschaltdauer eingeschaltet wird.

3. Verfahren nach einem der Ansprüche 1 bis 2, **dadurch gekennzeichnet, dass** die Lichtquelle (1) auf der Kamerasensorfläche angeordnet ist.

4. Verfahren nach einem der Ansprüche 1 bis 3, **dadurch gekennzeichnet, dass** die Lichtquelle (1) auf einer Kameralinse der Kamera angeordnet wird.

5. Verfahren nach einem der Ansprüche 1 bis 4, **dadurch gekennzeichnet, dass** eine Abdeckung vor der Kameralinse zur Abdunkelung des Kamerasensors vom Umgebungslicht angeordnet wird.

6. Verfahren nach einem der Ansprüche 1 bis 5, **dadurch gekennzeichnet, dass** die Lichtquelle (1) auf der dem Kamerasensor zugewandten Seite der Abdeckung angeordnet ist.

7. Verfahren nach einem der Ansprüche 1 bis 6, **dadurch gekennzeichnet, dass** der Lichtsensor in der Bildmitte des Bildschirmes (6) angeordnet wird.

8. Verfahren nach einem der Ansprüche 1 bis 7, **dadurch gekennzeichnet, dass** ein sich über eine Bildschirmfläche des Bildschirmes (6) erstreckender Lichtsensor auf dem Bildschirm (6) angeordnet wird.

9. Verfahren nach einem der Ansprüche 1 bis 8, **dadurch gekennzeichnet, dass**

zwischen der Kamera (2) und dem Bildschirm (6) ein weiteres Gerät (11) schaltbar ist, wobei zumindest ein Messverfahren gemäß den vorangegangenen Ansprüchen ohne das Gerät (11) und zumindest ein Messverfahren gemäß den vorangegangenen Ansprüchen mit dem zwischen der Kamera (2) und dem Bildschirm (6) geschalteten Gerät (11) durchgeführt wird,
sodass die durch das Gerät (11) verursachte Latenz gemessen wird.


**Claims**

1. A method for measuring a transmission time

between the generation of an image signal in front of a camera sensor of a camera (2) and the display of said image signal on a screen (6),
wherein said image signal is transmitted between the camera sensor and the screen (6),
an LED is arranged as a light source (1) in front of the camera sensor for generating an image signal, and the light source (1) is switched on for a switch-on duration at a switch-on time, wherein the switch-on duration is greater than or equal to the inverse image frequency of the camera,
and a display time is acquired using a light sensor, at which display time the image sensor is displayed on the screen (6),

**characterised in that**
the entire camera sensor surface of the camera sensor is exposed by an LED as a light source (1) extending over said camera sensor surface.

2. The method of claim 1, **characterised in that**

an LED as a light source (1) is arranged immediately in front of the camera sensor for generating an image signal, and
said LED as a light source (1) is switched on for a switch-on duration at a switch-on time.

3. The method of any one of claims 1 to 2, **characterised in that** the light source (1) is arranged on the camera sensor surface.

4. The method of any one of claims 1 to 3, **characterised in that** the light source (1) is arranged on a camera lens of the camera.

5. The method of any one of claims 1 to 4, **characterised in that** a cover is arranged in front of the camera lens to shield the camera sensor from the surrounding light.

6. The method of any one of claims 1 to 5, **characterised in that** the light source (1) is arranged on the side of the cover facing the camera sensor.

7. The method of any one of claims 1 to 6, **characterised in that** the light sensor is arranged at the image centre of the screen (6).

8. The method of any one of claims 1 to 7, **characterised in that** a light sensor extending over a screen surface of the screen (6) is arranged on said screen (6).

9. The method of any one of claims 1 to 8, **characterised in that**

another device (11) is connectable between the camera (2) and the screen (6), wherein at least one measuring method of any one the previous claims is performed without said device (11) and at least one measuring method of any one the previous claims is performed with said device (11) connected between the camera (2) and the screen (6),
so as to measure the latency caused by the device (11).


**Revendications**

1. Procédé de mesure d'un temps de transmission

entre la génération d'un signal d'image devant un capteur de caméra d'une caméra (2) et l'affichage du signal d'image sur un écran (6),
lequel le signal d'image est transmis entre le capteur de caméra et l'écran (6),
une DEL comme source de lumière (1) étant disposée devant le capteur de caméra pour générer un signal d'image et la source de lumière (1) étant allumée à un moment d'allumage pendant une durée d'allumage,
la durée d'allumage étant supérieure ou égale à la fréquence d'images inverse de la caméra, et un temps d'affichage auquel le signal d'image est affiché sur l'écran (6) est détecté au moyen d'un capteur de lumière,

**caractérisé en ce que**
la totalité de la surface du capteur de caméra est éclairée par une DEL s'étendant sur la surface du capteur de caméra en tant que source de lumière (1).

2. Procédé selon la revendication 1, **caractérisé en ce que**

une DEL comme source de lumière (1) est disposée directement devant le capteur de caméra pour produire un signal d'image,
ladite DEL comme source de lumière (1) étant allumée à un moment d'allumage pendant une durée d'allumage.

3. Procédé selon l'une quelconque des revendications 1 à 2, **caractérisé en ce que** la source de lumière (1) est disposée sur la surface du capteur de caméra.

4. Procédé selon l'une quelconque des revendications 1 à 3, **caractérisé en ce que** la source de lumière (1) est disposée sur une lentille de caméra.

5. Procédé selon l'une quelconque des revendications 1 à 4, **caractérisé en ce que** une couverture est disposée devant la lentille de caméra pour obscurcir le capteur de caméra par rapport à la lumière ambiante.

6. Procédé selon l'une quelconque des revendications 1 à 5, **caractérisé en ce que** la source de lumière (1) est disposée sur la côté orientée vers le capteur de caméra.

7. Procédé selon l'une quelconque des revendications 1 à 6, **caractérisé en ce que** le capteur de lumière est disposé au centre de l'écran (6).

8. Procédé selon l'une quelconque des revendications 1 à 7, **caractérisé en ce que** un capteur de lumière s'étendant à travers la surface de l'écran (6) est disposé sur l'écran (6).

9. Procédé selon l'une quelconque des revendications 1 à 8, **caractérisé en ce que**

un autre dispositif (11) peut être connecté entre la caméra (2) et l'écran (6), au moins un procédé de mesure selon les revendications précédentes étant réalisé sans ledit dispositif (11) et au moins un procédé de mesure selon les revendications précédentes étant réalisé avec ledit dispositif (11) connecté entre la caméra (2) et l'écran (6),
ainsi que la latence causée par ledit dispositif (11) est mesurée.

**Fig. 1**

**Fig. 2**

**Fig. 3**

Anzahl Messung
10000

Noch durchzuführen
0

Ende der Messung
15:17:34,808
18.05.2017

Histogramm

Latenz [ms]

**Fig. 4**

EP 3 483 617 B1

Anzahl Messung
10000

Noch durchzuführen
0

Ende der Messung
11:45:38,782
18.05.2017

Histogramm

Fig. 5

Anzahl Messung
10000

Noch durchzuführen
0

Ende der Messung
20:46:30,675
17.05.2017

Histogramm

Fig. 6

| Bezeichnung | Eigenschaft | Wert |
|---|---|---|
| LED | Latenz | < 10 µs |
| Photo Transistor | Latenz | < 1 ms |
| RIVL1 (DUT1) | Typ | RIVL_SA0152_101 |
| | SN | 8D00191764 |
| | Bildrate | 25 Hz |
| RIVL2 (DUT2) | Typ | RIVL_SA0152_101 |
| | SN | 8D00191765 |
| | Bildrate | 25 Hz |
| Kameramodul | Typ | ungespiegelt |
| | SN | 90 |
| | Konfiguration | 07_SOLARIS_LVB_TUER1_TL |
| | Hardware | 2.2.1 |
| | Bildrate | 50 Hz |
| Monitor | Typ | RMON_SA1016_020 |
| | SN | 4D00181731 |
| | Bildrate | 50 Hz |
| Messsoftware | Name | Test_Latency |
| | Version | 1.3.0 |

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013215756

- US 20140347499 A

**In der Beschreibung aufgeführte Nicht-Patentliteratur**

- **DOKUMENTE BACHHUBER CHRISTOPH et al.** A system for high precision glass-to-glass delay measurement in video communication. *2016 IEEE International Conference On Image Processing (ICIP),* 25. September 2016, 2132-2136

- **JUAN ANTONIO ; LENERO-BARDALLO et al.** A 3.6 µs Latency Asynchronous Frame-Free Event-Driven Dynamic-Vision-Sensor. *IEEE Journal of Solid- State Circuits,* 01. Juni 2011, vol. 46 (6), 1443-1455